# DEMANDE DE BREVET EUROPEEN

(11) **EP 1 184 579 A2**
(43) Date de publication de la demande: **06.03.2002**
(21) Numéro de dépôt: 01202993.0
(22) Date de dépôt: 08.08.2001
(51) Int. Cl.: F16B 7/14

(54) **Dispositif porte-manche**

(30) Priorité: 31.08.2000 LU 90633
(71) Demandeur: A.Z. INTERNATIONAL S.A., 2130 Luxembourg (LU)
(72) Inventeur:
(74) Mandataire: Waxweiler, Jean

(57) **Abrégé**

La présente invention concerne un dispositif pour soutenir les manches d'un ustensile de nettoyage. Le dispositif est constitué d'une structure du type boîte en forme de C pourvue, à l'extérieur, d'un appendice pour pouvoir être appliquée sur des parois fixes ou sur des chariots de nettoyage. Le dispositif comprend une paire d'éléments de soutien (2,3). Un premier élément (3) est monté à rotation de manière à pouvoir tourner à l'extrémité de l'un des bras de la structure de base en forme de C et le second élément (2) est disposé d'une manière non rotative mais articulée le long de l'autre bras et d'une partie du côté du fond de la structure en forme de C. L'insertion du manche, ainsi que sa désinsertion, est réalisée par une rotation partielle du premier élément (3), et sans frottement du manche sur l'élément de soutien opposé (2).

## Description

La présente invention concerne un dispositif pour supporter des ustensiles pourvus d'un manche et en particulier des ustensiles de nettoyage comprenant un manche.

Les supports d'ustensiles pourvus d'un manche sont bien connus et largement diffusés pratiquement dans tous les secteurs domestiques, industriels, des services etc...

Ces supports sont configurés de différentes façons et ils sont basés sur divers principes à partir des plus simples qui prévoient un trou présent dans le manche ou bien ce qui font passer d'une petite corde autour du manche. Il existe en outre des supports plus complexes qui font appel à divers expédients utilisant des aimants, des formes particulières de frottement ou un accouplement par encliquetage.

Les supports les plus avantageux sont ceux qui utilisent le frottement du fait qu'ils ne nécessitent pas une configuration particulière du manche qui peut demeurer ainsi lisse, ce qui offre l'avantage de la simplicité, de la commodité et du nettoyage facile. Ces derniers supports sont basés généralement sur l'effet du frottement qui apparaît entre au moins deux surfaces du support lui-même et du manche. En fait, l'utilisateur, surmontant une résistance initiale des diverses parties du support, insère le manche dans une zone en contact avec lesdites surfaces qui, en comprimant le manche, le soutienne au moyen du frottement entre les matières en contact.

L'un des principaux inconvénients des supports de manche actuels est qu'ils sont construits pour un manche qui possède un diamètre prédéterminé et qu'ils ne sont pas adaptés aux manches du commerce qui ont différents diamètres.

Un autre inconvénient de ces supports est que, du fait qu'ils sont basés uniquement sur le frottement entre les surfaces du support et le manche, le support n'assume pas correctement sa fonction quand le matériau se dégrade mais il relâche le serrage en laissant glisser le manche.

Un autre inconvénient des supports actuels est que, pendant la phase d'insertion ou de désinsertion du manche, du fait que les surfaces du support sont soumises à des forces de frottement et de compression qui déterminent des sollicitations de type alternatif, les matériaux du support subissent une dégradation assez rapide avec une possibilité de rupture.

Un autre inconvénient de beaucoup de supports consiste dans le fait que pour l'insertion et pour le dégagement du manche, ils exigent des interventions manuelles particulières.

Un autre inconvénient que l'on rencontre dans certains supports est qu'ils nécessitent une attention particulière pour l'engagement du manche.

Un autre inconvénient de nombreux supports est qu'ils sont sensibles à des secousses, à des coups etc..., qui peuvent modifier la prise du manche lequel subit des glissements progressifs ou des dégagements imprévus à partir des supports.

D'autres inconvénients d'une certaine importance que présentent beaucoup de supports du commerce, apparaissent lorsque les supports sont appliqués non pas à une structure fixe mais à une structure mobile comme les chariots de nettoyage. Pour les opérations d'insertion ou de désinsertion des manches dans les supports, l'utilisateur doit exercer des forces d'une certaine amplitude. Si la structure est mobile et en particulier s'il s'agit d'un chariot, elle ne présente pas une inertie propre suffisante et elle est susceptible de subir des déplacements indésirables. Dans ce cas, l'utilisateur doit intervenir, pour empêcher ces déplacements, en réagissant avec la main libre. Ceci n'est pas facile si l'utilisateur ne dispose pas de sa main libre parce qu'elle est employée pour une autre opération.

Le but du dispositif porte-manche suivant la présente invention est de remédier aux inconvénients précités.

Un autre but de la présente invention est de fournir un dispositif qui peut soutenir les manches de diamètres différents sans avoir à modifier la force de serrage.

Un autre but de l'invention est de fournir un dispositif porte-manche dans lequel au moins un élément dont la surface vient en contact avec le manche à supporter, peut céder élastiquement.

Un autre but de l'invention est de fournir un dispositif porte-manche dans lequel le matériau d'au moins un élément dont la surface vient en contact avec le manche à supporter, peut céder élastiquement.

Un but de la présente invention est de fournir un dispositif porte-manche dans lequel le profil des surfaces des éléments qui viennent en contact avec le manche, est configuré de telle façon que, pendant sa phase d'insertion, le manche effectue seulement une rotation, en roulant seulement sur les surfaces du porte-manche, sans frottement.

Ces buts ainsi que d'autres qui ressortiront de la description qui va suivre, sont obtenus, suivant la présente invention, au moyen du dispositif porte-manche tel que décrit ci-après.

Le dispositif porte-manche suivant la présente invention comprend essentiellement une structure de base en forme de C qui peut être appliquée sur une paroi fixe ou sur un chariot et qui présente deux bras équipés d'éléments actifs pour la prise du manche.

Un premier élément, de forme circulaire, appelé dans ce qui va suivre "roue de prise", est articulé sur l'extrémité d'un bras en forme de C de la structure de base.

De préférence, l'axe du tourillon supportant la roue de prise articulée sur l'extrémité d'un bras en forme de C de la structure de base, ne coïncide pas avec l'axe de rotation de la roue de prise mais il est décalé par rapport à cet axe, avec la possibilité de faire varier le décalage. On peut ainsi faire varier, par une rotation partielle du tourillon de support, la distance entre la roue de prise et l'autre élément actif monté sur l'autre bras en forme de C de la structure de base, afin de pouvoir recevoir et supporter des manches de différents diamètres.

La roue de prise présente avantageusement, sur sa surface périphérique, une série de creux, s'étendant parallèlement à l'axe de rotation, en forme d'arc de cercle, pour obtenir une meilleure prise du manche. Ce moyen a pour conséquence que le manche, aussi bien lorsqu'il est inséré dans le dispositif porte-manche que lorsqu'il en est extrait, fait obligatoirement tourner la roue de prise. L'éventuelle variabilité de la profondeur des creux de la roue de prise permet d'utiliser le dispositif porte-manche pour la prise de manches ayant des diamètres différents.

Le second élément actif du dispositif porte-manche est supporté par le second bras en forme de C de la structure de base au moyen de deux tétons solidaires du bras qui permettent au second élément d'effectuer un mouvement articulé pour pouvoir s'adapter éventuellement au manche pendant son insertion. Le second élément s'étend le long du second bras en forme de C de la structure de base pratiquement jusqu'au milieu de la structure de base, sa surface tournée vers l'embouchure de la structure en forme de C constituant l'élément opposé à la roue de prise.

En disposant d'une façon appropriée la roue de prise par rapport au second élément, on peut former une ouverture adéquate à travers laquelle peut passer le manche. L'insertion du manche, mis en position avec une légère pression sur l'ouverture, est réalisée en entraînant sa rotation partielle. Il en résulte que dans des positions diamétralement opposées, le manche roule soit sur la surface du second élément soit sur la surface de la roue de prise, laquelle tourne simultanément autour de son propre axe.

Aucun frottement n'intervient entre les surfaces en contact, et on obtient au contraire une pression sur le manche qui, après avoir surmonté une résistance initiale, se stabilise à l'intérieur du support.

Il est évident que s'il n'y a pas de frottements, il n'y a pas d'usure.

La configuration particulière articulée du second élément, en association avec la configuration particulière de la roue de prise et compte tenu également de la souplesse du matériau employé, permet de soutenir des manches de diamètres différents les plus répandus sur le marché.

Le caractère universel du support pour soutenir des manches de diamètres différents peut être également obtenu en configurant d'une manière appropriée la roue de prise avec des rainures de diverses profondeurs sur sa périphérie, et en soutenant également la roue de prise au moyen d'un tourillon excentré. En agissant sur le tourillon excentré, on peut déterminer un décalage de l'axe de rotation faisant varier la distance entre la périphérie de la roue de prise et le second élément actif qui est soutenu d'une manière articulée par la partie opposée.

Le caractère universel de l'emploi du support pour soutenir des manches de divers diamètres, peut être également obtenu en utilisant en association la configuration périphérique de la roue de prise, pourvue d'une succession de rainures qui peuvent être diversifiées le long de sa périphérie, et l'emploi du tourillon excentré de la roue de prise.

La présence de stries éventuelles sur les surfaces de ces éléments actifs augmente la sécurité de la prise.

L'engagement du manche dans le dispositif porte-manche associé est obtenu par une simple pression exercée contre le dispositif, ce qui fait tourner la roue de prise, tandis que son dégagement est obtenu par une simple traction à l'opposé du dispositif, ce qui fait tourner la roue de prise en sens inverse du cas précédent.

Le dispositif suivant la présente invention ne nécessite aucun moyen pour engager le manche dans une position quelconque prédéterminée, du fait que n'importe quelle partie du manche peut être engagée, en ayant la certitude d'une prise correcte. Ceci évite une vérification, de la part de l'utilisateur, que la prise, une fois réalisée, est établie correctement.

En outre, le dispositif suivant la présente invention est insensible aux secousses ou aux chocs que peut subir le chariot qui soutient le support.

D'après ce qui précède, il ressort à l'évidence que le dispositif porte-manche suivant la présente invention présente de nombreux avantages.

Une variante du dispositif porte-manche, assumant les mêmes fonctions que précédemment décrites, peut être obtenue en équipant la structure de base en forme de C avec deux éléments de soutien du manche, montés à rotation aux extrémités des deux bras en forme de C, écartés l'un de l'autre d'une distance appropriée, et au moyen d'un troisième élément de soutien monté d'une manière articulée sur le fond, en position médiane, du côté de la structure de base en forme de C qui relie les bras.

Tout ce qui précède résulte clairement de l'examen des planches de dessins annexés.

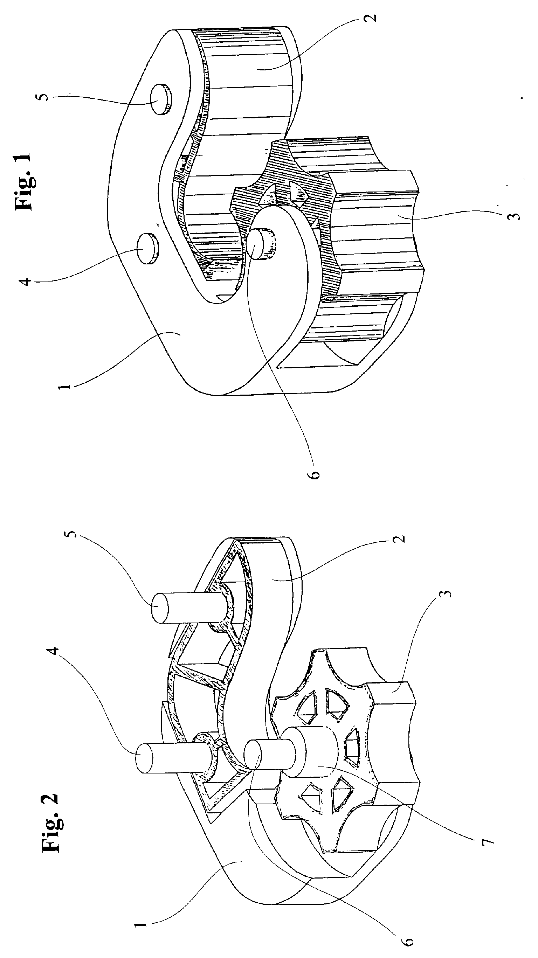

La figure 1 est une vue en perspective d'un dispositif porte-manche comprenant la structure de base en forme de C et les deux éléments de soutien dont l'un tourne autour d'un axe et dont l'autre est soutenu d'une manière articulée par deux tétons.

La figure 2 représente le dispositif porte-manche en coupe, à l'exception des tétons, suivant un plan parallèle à la position de la structure de base en forme ce C vue en perpective.

On notera que l'arbre qui soutient l'élément rotatif est pourvu d'un tourillon excentré pour permettre au dispositif porte-manche de soutenir des manches de diamètres différents par rapport à des valeurs standards.

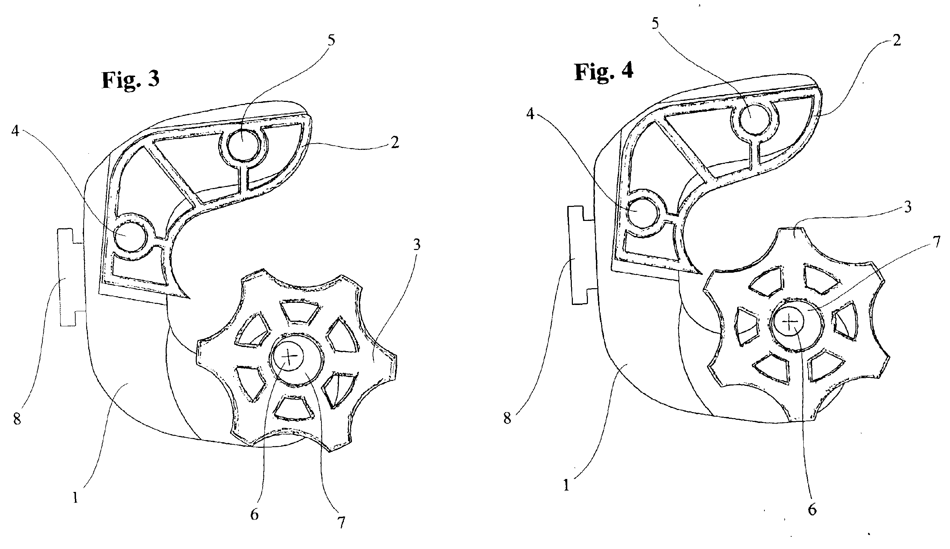

La figure 3 est une vue en plan correspondant à la figure 2. L'élément rotatif se trouve en position pour permettre l'introduction du manche.

La figure 4 est une vue en plan correspondant à la figure 3 dans laquelle la position de l'élément rotatif est celle qu'il prend lorsqu'il maintient serré le manche à soutenir.

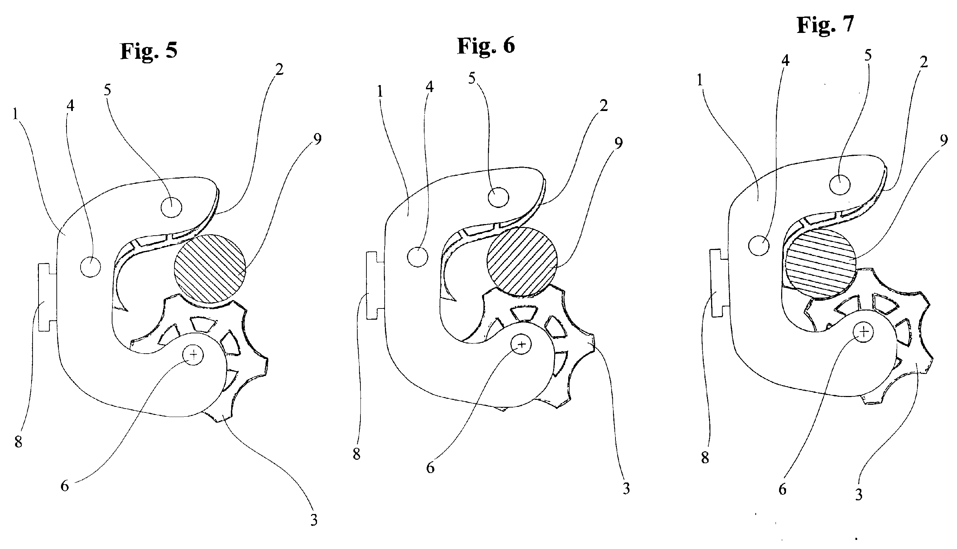

La figure 5 est une vue en plan du dispositif porte-manche avec le manche rapproché pour pouvoir être pris.

La figure 6 est une vue en plan du dispositif porte-manche avec le manche se trouvant dans une position correspondant à l'endroit de la plus petite largeur entre les deux éléments de soutien. Le manche peut entrer ou sortir avec une légère rotation. Le type d'accouplement qui s'établit entre le manche et les éléments de soutien est un type de roulement.

La figure 7 est une vue en plan du dispositif porte-manche avec le manche en position de serrage entre les deux éléments de soutien.

La figure 8 est une vue en perspective du dispositif porte-manche et du manche correspondant à la figure 5.

La figure 9 est une vue en perspective du dispositif porte-manche et du manche correspondant à la figure 6.

La figure 10 est une vue en perspective du dispositif porte-manche et du manche correspondant à la figure 7.

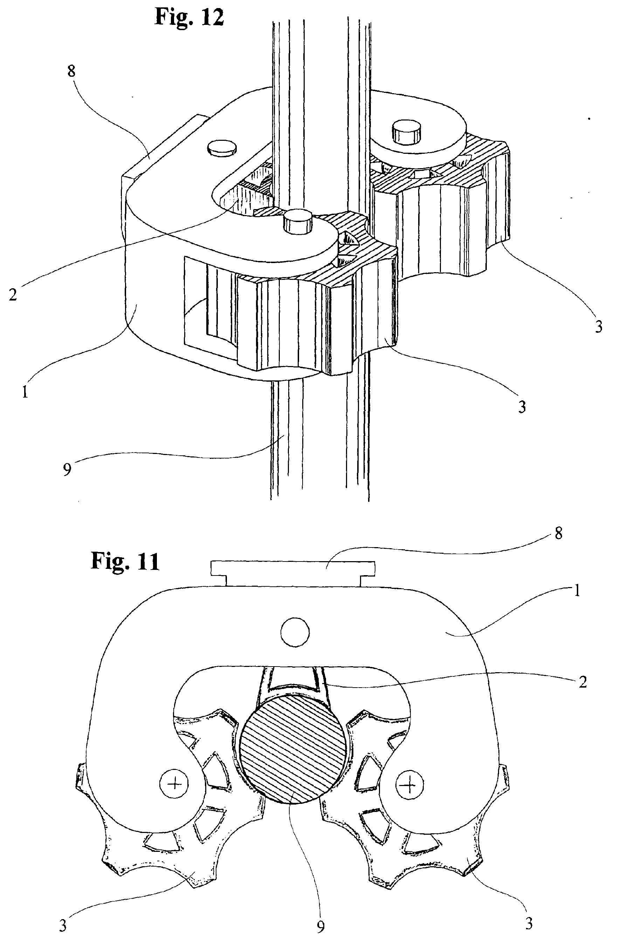

La figure 11 est une vue en plan d'un dispositif porte-manche avec un manche préalablement inséré, dispositif dans lequel les éléments de soutien sont constitués de deux éléments rotatifs, opposés l'un à l'autre, et d'un élément articulé disposé sur le fond de la structure.

La figure 12 est une vue en perspective correspondant à la figure 11.

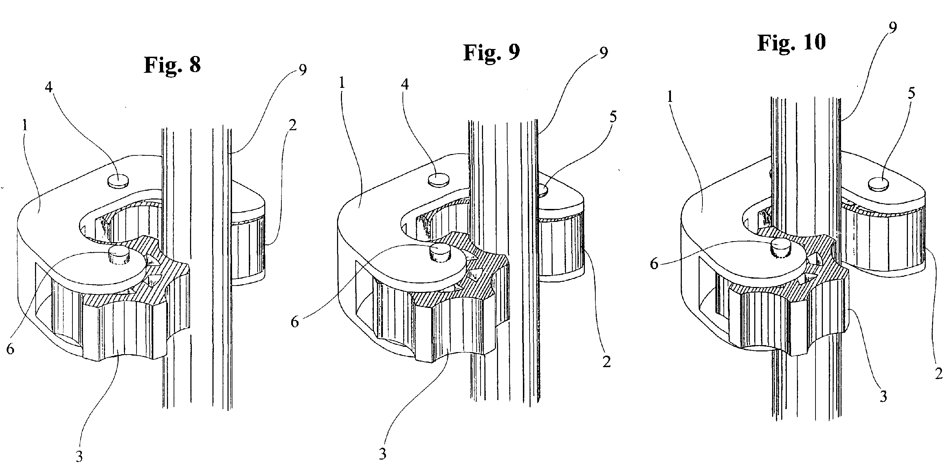

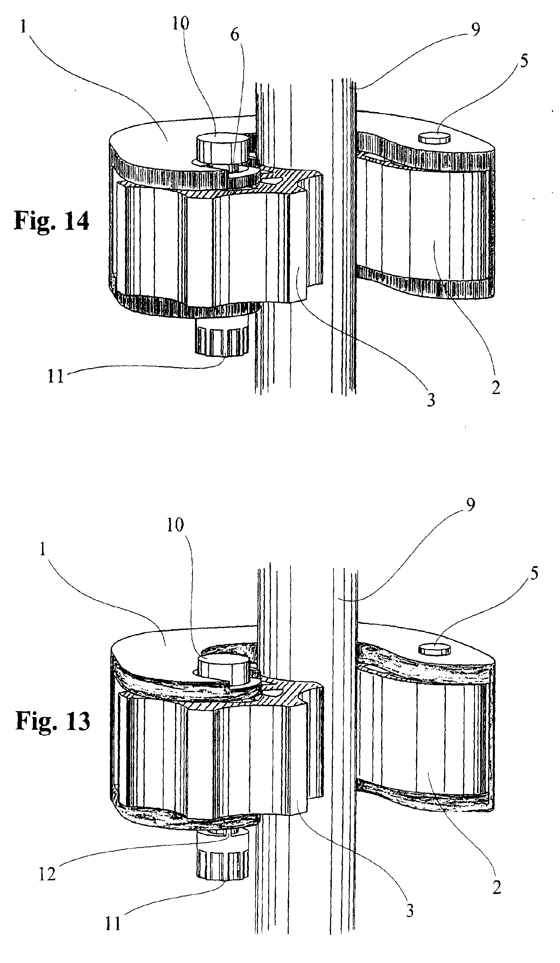

La figure 13 est une vue en perspective du dispositif porte-manche et du manche correspondant à la figure 10, à la différence toutefois que les extrémités du tourillon de la roue de prise sont pourvues de prolongements qui permettent de conférer au tourillon des décalages angulaires déterminés après un coulissement axial pour le dégager d'un blocage préexistant. Les décalages angulaires du tourillon, engagés par ses deux extrémités dans le support en forme de C, déterminent des décalages angulaires correspondants de l'axe de rotation de la roue de prise, du fait que, par construction, cet axe est excentré par rapport à l'axe du tourillon de montage. En faisant ainsi tourner le tourillon de montage, on peut obtenir des variations de la distance entre la roue de prise et l'élément de soutien opposé du dispositif.

La figure 14 est une vue en perspective du dispositif porte-manche et du manche correspondant à la figure 13, le tourillon de la roue de prise se trouvant bloqué à l'encontre des décalages angulaires au moyen d'une saillie extrême engagée dans une entaille du support en forme de C.

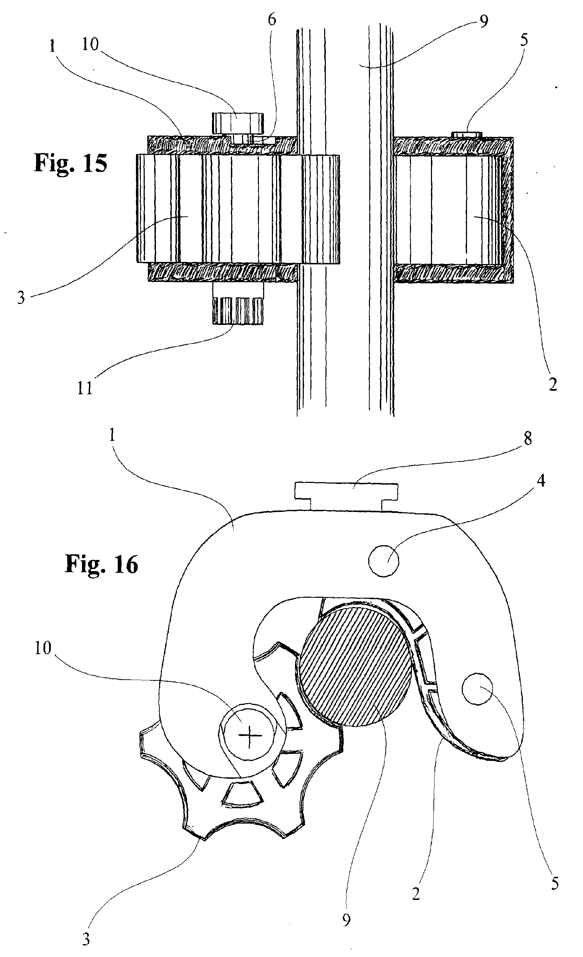

La figure 15 est une vue frontale du dispositif porte-manche et du manche correspondant à la figure 14.

La figure 16 est une vue en plan du dispositif porte-manche et du manche correspondant à la figure 15.

Sur les dessins apparaissent la structure de base en forme de C 1 du dispositif porte-manche pouvant être appliqué sur une paroi fixe ou sur un chariot, l'élément de soutien 2 du manche 9, maintenu d'une façon articulée par les tétons 4 et 5 solidaires de la structure de base en forme de C 1, l'élément de soutien 3 du manche 2 monté à rotation autour de l'arbre 7, l'extrémité 6 de l'arbre 7 formant un tourillon excentré par rapport à l'arbre 7 et engagé dans la structure de base 1 en forme de C, les prolongements 10 et 11 situés aux extrémités 6 de l'arbre 7, une saillie 12 du prolongement 11 qui, après un coulissement axial de l'arbre 7, peut s'engager dans des sièges appropriés ou se dégager de ces sièges qui sont réalisés dans la structure de base 1 en forme de C. En faisant tourner les prolongements 10,11 situés aux extrémités 6 de l'arbre 7 de la roue de prise 3, on peut faire varier d'une manière appropriée la position angulaire de l'arbre 7, afin d'ajuster la distance entre l'élément rotatif 3 et l'élément articulé 2.

En utilisant les moyens de réglage de l'excentricité 6,7,10,11 et 12, il est possible de saisir, avec les éléments de soutien 2 et 3, des manches 9 ayant des diamètres différents.

On voit également sur les dessins un appendice 8 solidaire de la structure de base 1 en forme de C et destiné à être inséré dans des sièges correspondants prévus sur des parois fixes ou sur un chariot.

## Revendications

1. Dispositif porte-manche comprenant une structure de base (1) en forme de C, pouvant être appliquée sur des parois fixes ou sur des chariots, **caractérisé en ce qu'**il comprend une paire d'éléments de soutien (2,3) parmi lesquels un premier élément (3) est monté à rotation à l'extrémité de l'un de deux bras de la structure de base (1) en forme de C et dont le second élément (3) est disposé d'une façon non rotative mais articulée tout le long de l'autre bras et d'une partie du côté de fond de la structure de base (1) en forme de C, afin de permettre le passage d'un manche (2) d'une position libre à une position engagée, comprise entre les deux éléments de soutien (2,3), au moyen d'une rotation partielle du premier élément (3) articulé.

2. Dispositif porte-manche suivant la revendication 1 **caractérisé en ce que** le manche (2) passe, à partir d'une position de simple appui contre les deux surfaces des deux éléments de soutien (2,3), à une position de soutien comprise entre les deux éléments (2,3), au moyen d'un roulement simultané du manche (2) soit sur la surface du second (2) des deux éléments soit sur la surface du premier (3) des éléments lequel tourne simultanément sans frottement.

3. Dispositif porte-manche suivant l'une des revendications 1 ou 2 **caractérisé en ce que** l'élément monté à rotation (3) présente, sur sa surface périphérique, une pluralité de creux en forme d'arc de cercle pour recevoir le manche.

4. Dispositif porte-manche suivant la revendication 3 **caractérisé en ce que** l'élément monté à rotation (3) présente une pluralité de creux de diamètres différents, en forme d'arc de cercle, pour des manches (9) ayant des diamètres de dimensions différentes.

5. Dispositif porte-manche suivant l'une des revendications précédentes **caractérisé en ce que** l'élément monté à rotation (3) peut être décalé, par une rotation partielle du tourillon excentré (6) de son arbre (7), pour être rapproché et éloigné du second élément (2).

6. Dispositif porte-manche suivant l'une des revendications 1 ou 2 **caractérisé en ce que** le second élément (2) est monté d'une façon articulée sur la structure de base (1) afin de favoriser la souplesse élastique du matériau dont il est constitué.

7. Dispositif porte-manche suivant l'une des revendications 1 ou 2 **caractérisé en ce qu'**au moins l'un des éléments de soutien (2 ou 3) est constitué d'un matériau cédant élastiquement, du type caoutchouc.

8. Dispositif porte-manche suivant l'une des revendications 1 ou 2 **caractérisé en ce que** l'un au moins des éléments de soutien (2 ou 3) est constitué d'un matériau à coefficient de frottement élevé.

9. Dispositif porte-manche suivant l'une des revendications 1 ou 2 **caractérisé en ce que** l'un au moins des éléments de soutien (2 ou 3) présente, sur sa surface, des stries et/ou des rayures pour augmenter le frottement.

10. Dispositif porte-manche suivant une ou plusieurs des revendications précédentes **caractérisé en ce que** l'un des éléments (2 ou 3) de soutien du manche (9), distinct et séparé de l'autre élément, est rotatif.

11. Dispositif porte-manche suivant une ou plusieurs des revendications précédentes **caractérisé en ce que** les extrémités du tourillon excentré (6) sont pourvues de prolongements (10,11) qui, par suite de leur rotation partielle précédée ou suivie de coulissements axiaux du tourillon (6), font varier la position angulaire de l'arbre excentré (7), pour rapprocher ou éloigner la roue de prise (3) du second élément de soutien (2).

12. Dispositif porte-manche suivant la revendication 11 **caractérisé en ce que** l'un des prolongements (10,11), situé à l'extrémité du tourillon (6) de soutien de la roue de prise (3), est pourvu d'une saillie (12) qui, à la suite du coulissement axial du tourillon (6), s'engage dans des sièges appropriés de la structure de base (1) en forme de C ou s'en dégage, afin de bloquer ou de débloquer la position angulaire occupée par l'arbre excentré (7) de la roue de prise (3).
